# EUROPÄISCHE PATENTANMELDUNG

(11) **EP 2 394 504 A1**
(43) Veröffentlichungstag der Anmeldung: **14.12.2011**
(21) Anmeldenummer: 10165358.2
(22) Anmeldetag: 09.06.2010
(51) Int. Cl.: A01D 43/14

(54) **Vorrichtung zum Ziehen eines Spritzwagens, vorzugsweise Traktor**

(71) Anmelder: Vöhringer, Markus, 88094 Oberteuringen-Hefigkofen (DE)
(72) Erfinder: Vöhringer, Markus, 88094 Oberteuringen-Hefigkofen (DE)
(74) Vertreter: Engelhardt & Engelhardt

(57) **Zusammenfassung**

Bei einer Vorrichtung (1) zum Ziehen eines auf einem Traggestell (4) abgestützten Spritzwagens (3) durch eine Obst- oder Weinplantage, vorzugsweise Traktor, an dem der Spritzwagen (3) angelenkt ist, sollen zum einen die in einer Obst- oder Weinplantage anfallenden Arbeiten, insbesondere Spritzen der Obstbäume oder Weinreben und Mähen des dazwischen anwachsenden Grases, gleichzeitig durchzuführen sein und zum anderen soll für die gesamte Zugeinheit ein Wendekreis geschaffen werden, durch den das Befahren der Obst- oder Weinplantage auch in eng begrenzten Anbaubereichen möglich ist.

Dies wird dadurch erreicht, dass an dem Traggestell (4) des Spritzwagens (3) ein oder mehrere um eine Längsachse (12) rotierbare Schneidmesser (5) angebracht ist bzw. sind und dass das jeweilige Schneidmesser (5) höhenverstellbar beabstandet zu dem Boden (2) und parallel zu diesem ausgerichtet ist.

## Beschreibung

Die Erfindung bezieht sich auf eine Vorrichtung zum Ziehen eines Spritzwagens durch eine Obst- oder Weinplantage, vorzugsweise Traktor, an dem der Spritzwagen angelenkt ist oder auf einen Spritzwagen nach dem Oberbegriff des Patentanspruches 2 oder auf einen Bausatz nach dem Oberbegriff des Patentanspruches 11.

Bereits seit Jahrzehnten ist es bekannt, Obst- und Weinplantagen derart anzuordnen, dass die einzelnen Obstbäume oder Weinreben in Reihen verlaufen und dass zwischen den einzelnen Reihen von Obstbäumen bzw. Weinreben ein Abstand geschaffen ist, durch den eine Zugmaschine, beispielsweise ein Traktor, hindurch fahren kann. Es ist nämlich notwendig, die Obstbäume bzw. Weinreben im Verlauf der Wachstumsphase der Früchte bzw. Weintrauben zu spritzen. Zu diesem Zweck ist an dem Traktor ein Spritzwagen angelenkt, der aus einem Traggestell, einem Tank in dem das Spritzmittel eingefüllt ist und einer Spritzvorrichtung im Heckbereich des Spritzwagens besteht.

Zwischen den einzelnen Reihen von Obstbäumen bzw. Weinreben ist Gras angepflanzt, um die Befahrbarkeit des Bodens durch den Traktor zu verbessern, so dass keine Lehmfurchen oder sonstige Beschädigungen an dem Boden durch das Befahren des Traktors und des Spritzwagens entstehen. Diese Grasflächen sind in regelmäßigen Abständen zu mähen. Das abgemähte Gras, das auch als Mulch bezeichnet ist, wird dabei seitlich ausgeworfen, so dass dieses an die Stämme der Obstbäume bzw. Weinreben aufgehäuft ist und dort verrottet, um den Pflanzen Nährstoffe zur Verfügung zu stellen.

Als Mähgerät dienen sogenannte Mulcher, die aus einem oder mehreren parallel zu dem Boden rotierenden Schneidmessern bestehen. Die Mulcher sind mittels eines Gehäuses nach oben und seitlich gekapselt und in Richtung des Bodens offen ausgestaltet.

Es ist seit langem bekannt, an den Traktor als Zugmaschine den Spritzwagen und an den Spritzwagen ein Mulchgerät anzuhängen, um die Arbeitsgänge Spritzen und Mähen der Obst- bzw. Weinplantage gleichzeitig durchzuführen.

Es hat sich jedoch als äußerst nachteilig herausgestellt, wenn solche Geräte hintereinander angeschlossen sind, dass dadurch die Länge der gesamten Zugeinheit erheblich verlängert ist, so dass deren Wendekreis vergrößert ist. Insbesondere in landwirtschaftliche genutzten Flächen ist jedoch eine raumausnützende Anbauweise erforderlich, so dass derart große Wendekreise nicht zur Verfügung stehen, um innerhalb einer Obst- oder Weinplantage solche Zugeinheiten rangieren und in benachbarte Reihen einfahren zu können.

Daher werden für die einzelnen Arbeitsgänge in der Obst- oder Weinplantage die Geräte einzeln eingesetzt. Der Landwirt hat demnach jeden Arbeitsgang separat durchzuführen. Dies ist jedoch äußerst zeitintensiv.

Es ist daher Aufgabe der Erfindung, eine Vorrichtung zum Ziehen eines Spritzwagens oder eine Spritzwagen oder ein Bausatz zur Nachrüstung des Spritzwagens der eingangs genannten Gattungen bereit zu stellen, mittels denen zum Einen die in einer Obst- oder Weinplantage anfallenden Arbeiten, insbesondere Spritzen der Obstbäume oder Weinreben und Mähen des dazwischen anwachsenden Grases, gleichzeitig durchzuführen ist und zum Anderen für die gesamte Zugeinheit einen Wendekreis zu schaffen, durch den das Befahren der Obst- oder Weinplantage auch in eng begrenzten Anbaubereichen möglich ist. Der Wendekreis soll dabei dem Wendekreis einer üblichen Zugeinheit aus Zugmaschine und Spritzwagen entsprechen.

Diese Aufgaben sind erfindungsgemäß durch die Merkmale der kennzeichnenden Teile der Patentansprüche 1, 2 und 11 gelöst.

Weitere vorteilhafte Weiterbildungen der Erfindung ergeben sich aus den Unteransprüchen.

Dadurch, dass an dem Traggestell des Spritzwagens das oder die Schneidmesser zum Durchtrennen des Grases angeordnet ist bzw. sind, kann der Landwirt gleichzeitig die Obst- oder Weinplantage mit Spritzmitteln besprühen und das dazwischen wachsende Gras mähen.

Darüber hinaus ist das oder die Schneidmesser unterhalb des Traggestells des Spritzwagens, also zwischen diesem und dem Boden, angeordnet, so dass die Länge der gesamten Zugeinheit, die aus dem Traktor und dem Spritzwagen besteht, den bekannten Längen solcher Zugmaschinen entspricht.

Die Schneidmesser können wahlweise zugestellt werden, wenn dies von dem Benutzer der erfindungsgemäßen Vorrichtung gewünscht ist. Folglich entfällt ein zeitaufwendiger An- und Abbau. Ferner sind dadurch die Betriebskosten nicht erhöht, denn der Landwirt mäht das Gras zum gleichen Zeitpunkt wie bisher; allerdings kann der Landwirt beim Durchfahren der Obst- oder Weinplantage zwei Arbeitsgänge gleichzeitig ausführen, nämlich Besprühen der Pflanzen mit Spritzmitteln und Mähen des Grases, so dass dadurch erhebliche Arbeitszeit eingespart ist.

In der Zeichnung ist ein erfindungsgemäßes Ausführungsbeispiel dargestellt, das nachfolgend näher erläutert ist. Im Einzelnen zeigt:
- Figur 1a: einen Traktor als Vorrichtung zum Ziehen eines Spritzwagens, an dem ein Schneidmesser rotierbar angebracht ist, im Ausgangszustand und in Seitenansicht,
- Figur 1b: den Traktor und den Spritzwagen gemäß Figur 1a sowie das Schneidmesser im abgesenkten Zustand zum Mähen des Grases und
- Figur 2: einen Bausatz zur Anbringung des Schneidmessers an einem Traggestell des Spritzwagens gemäß Figur 1 a.

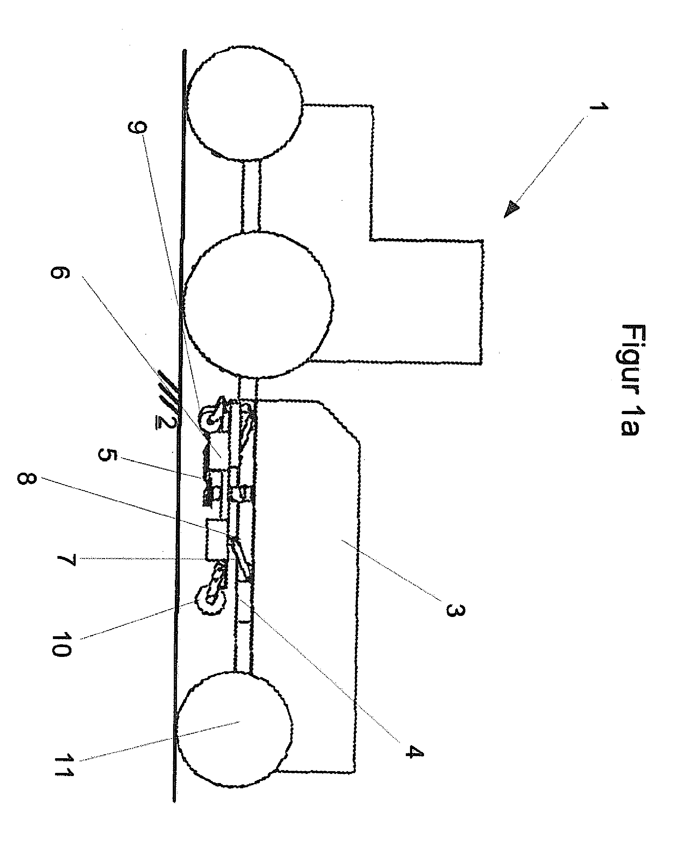

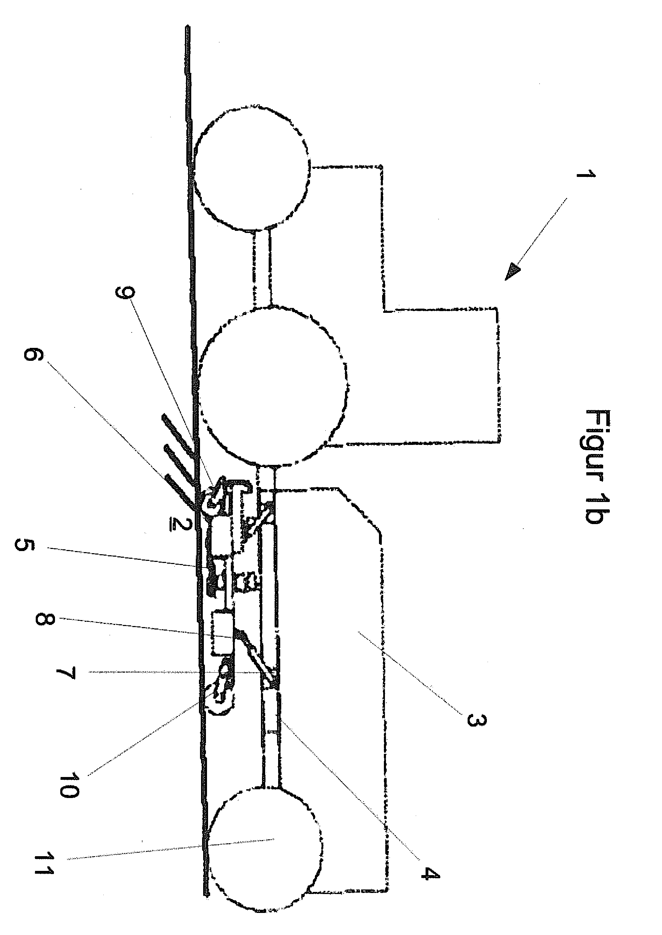

In Figur 1 a ist eine Vorrichtung 1 zum Ziehen eines Spritzwagens 3 zu entnehmen, die als Traktor 1 ausgestaltet ist. An dem Traktor 1 ist ein Traggestell 4, auf dem der Spritzwagen 3 abgestützt ist, angelenkt. An der dem Boden 2 zugewandten Unterseite des Traggestells 4 sind zwei Paare von Schneidmessern 5 rotierbar um eine Längsachse 12 angelenkt. Die Längsachse 12 der Schneidmesser 5 verläuft senkrecht zu dem Boden 2, so dass die Schneidmesser 5 im Wesentlichen parallel zu dem Boden 2 ausgerichtet sind. Durch die Schneidmesser 5 soll auf dem Boden 2 wachsendes Gras abschneidbar sein.

Zu diesem Zweck ist gemäß Figur 1b das jeweilige Schneidmesser 5 abgesenkt, so dass dieses unmittelbar über der von dem Boden 2 gebildete Oberfläche angeordnet ist und das Gras in dieser Höhe abschneidet.

Das jeweilige Schneidmesser 5 ist in einem teilweise geschlossenen Gehäuse 6 untergebracht, so dass das abgeschnittene Gras durch die Rotation der Schneidmesser 5 seitlich aus der dort vorgesehenen Öffnung herausgeschleudert ist. Das Gehäuse 6 ist des Weiteren im Bereich des Bodens 2 offen ausgestaltet.

Darüber hinaus ist das Gehäuse 6 mittels zweier Laufrollen 9 und einem Paar von parallel zueinander verlaufenden Laufwalzen 10 auf dem Boden 2 abgestützt, wenn diese abgesenkt ist. Die Laufrollen 9 sind zwischen dem Traktor 1 und dem jeweiligen Schneidmesser 5 und die Laufwalzen 10 sind zwischen dem Schneidmesser 5 und der Achse 11 des Spritzwagens 3 angeordnet.

Das Gehäuse 6 und die daran angelenkten Schneidmesser 5 weisen einen Abstand zueinander auf, durch den die Schnitthöhe eingestellt ist. Das Gehäuse 6 kann nämlich solange abgesenkt werden, bis die Laufwalzen 10 und die Laufrollen 9 auf dem Boden 2 aufliegen.

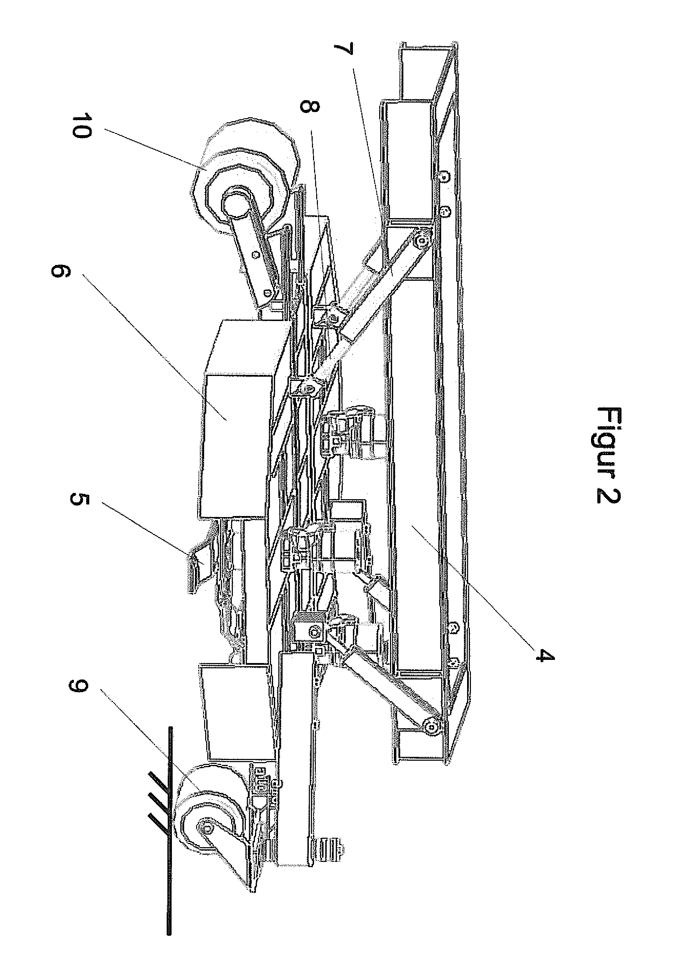

Insbesondere aus Figur 2 ist ersichtlich, dass zwischen dem Traggestell 4 und dem Gehäuse 6 zwei Kolben 7 angelenkt sind, durch die hydraulisch eine Kolbenstange 8 verschiebbar ist. Die Kolbenstange 8 ist dem Gehäuse 6 zugeordnet und verschwenkbar an diesem befestigt.

Die Hydraulikflüssigkeit zur Betätigung der Kolben 7 ist in einem nicht dargestellten Vorratsbehälter eingefüllt. An dem Traktor 1 sind Bedienelemente vorgesehen, durch die die Hydraulikflüssigkeit aus dem Vorratsbehälter in den von dem Kolben 7 abgetrennten Raum einpressbar oder herauspumpbar ist, so dass der Kolben 7 in Richtung des Bodens 2 oder in Richtung des Traggestells 4 bewegbar ist. Die Bewegung der Kolben 7 wird von den Kolbenstangen 8 auf das Gehäuse 6 übertragen. Das Gehäuse 6 ist an einem Rahmen 13 angebracht, an dem auch die Schneidmesser 5 angelenkt sind. Folglich ist jedes der Schneidmesser 5 gemeinsam mit dem Rahmen 6 höhenverstellbar an dem Traggestell 4 gelagert, so dass der Abstand zwischen den Schneidmessern 5 und dem Boden 2 variabel einstellbar ist. Diese Höheneinstellung kann von dem den Traktor 1 bedienenden Landwirt durchgeführt werden.

Die beiden Kolben 7 und die daran angebrachte Kolbenstange 8 sind parallel zueinander seitlich versetzt an dem Traggestell 4 angelenkt.

Die Schneidmesser 5 werden mittels einer Antriebsmechanik, die trieblich mit dem Traktor 1 verbunden ist, angetrieben.

Folglich kann gleichzeitig die an dem Spritzwagen 3 angebrachte nichtdargestellte Spritzvorrichtung betätigt und die Schneidmesser 5 zum Mähen des Grases aktiviert sein. Der Landwirt kann damit bei einer Durchfahrt durch eine Obst- oder Weinplantage sowohl die Pflanzen spritzen als auch das dazwischen wachsende Gras abschneiden und dieses an die Stämme der Pflanzen als Mulch auslegen.

Der Wendekreis der gesamten Zugeinheit, bestehend aus Traktor 1, Schneidmessern 5 und Spritzwagen 4, ist gleich groß bemessen wie die bisherigen Anordnungen aus Traktor und Spritzwagen, da die Schneidmesser 5 zwischen der Achse 11 des Spritzwagens 3 und dem Traktor 1 angebracht sind. Darüber hinaus können die Schneidmesser 5 von dem Boden 2 beabstandet sein, so dass diese die Arbeitsweise des Traktors 1 und des Spritzwagens 3 nicht behindern und keine unnötige Energie verbrauchen, wenn nämlich das Gras zwischen den Pflanzen nicht abzuschneiden ist.

Die Schneidmesser 5 sind als Bausatz gemeinsam mit dem Gehäuse 6 und dem Kolben 7 bzw. Kolbenstangen 8 erhältlich und können nachträglich an jedes Traggestell 4 montiert werden.

## Patentansprüche

1. Vorrichtung (1) zum Ziehen eines auf einem Traggestell (4) abgestützten Spritzwagens (3) durch eine Obst- oder Weinplantage, vorzugsweise Traktor, an dem der Spritzwagen (3) angelenkt ist,
**dadurch gekennzeichnet,**
**dass** an dem Traggestell (4) des Spritzwagens (3) ein oder mehrere um eine Längsachse (12) rotierbare Schneidmesser (5) angebracht ist bzw. sind und dass das jeweilige Schneidmesser (5) höhenverstellbar beabstandet zu dem Boden (2) und parallel zu diesem ausgerichtet ist.

2. Spritzwagen, insbesondere zur Verwendung an einem Traktor (1), bestehend aus einem Traggestell (4),
**dadurch gekennzeichnet,**
**dass** an dem Traggestell (4) des Spritzwagens (3) ein oder mehrere um eine Längsachse (12) rotierbare Schneidmesser (5) angebracht ist bzw. sind und dass das jeweilige Schneidmesser (5) höhenverstellbar beabstandet zu dem Boden (2) und parallel zu diesem ausgerichtet ist.

3. Vorrichtung nach Anspruch 1 oder 2,
**dadurch gekennzeichnet,**
**dass** zwischen dem Traggestell (4) des Spritzwagens (3) und dem die jeweiligen Schneidmesser (5) abstützenden Rahmen (13) ein oder mehrere hydraulisch oder pneumatisch betriebener Kolben (7) angebracht ist bzw. sind, der oder die trieblich mit dem Traktor (1) verbunden ist bzw. sind.

4. Vorrichtung nach Anspruch 3,
**dadurch gekennzeichnet,**
**dass** der Abstand zwischen den Schneidmessern (5) und dem Boden (2) mittels der Kolben (7) einstellbar ist.

5. Vorrichtung nach Anspruch 3,
**dadurch gekennzeichnet,**
**dass** die Kolben (7) parallel zueinander und seitlich versetzt an dem Traggestell (4) des Spritzwagens (3) angelenkt sind.

6. Vorrichtung nach einem der vorgenannten Ansprüche,
**dadurch gekennzeichnet,**
**dass** die Schneidmesser (5) von einem Gehäuse (6) bereichsweise umschlossen sind und dass die dem Boden (2) zugewandte Seite des Gehäuses (6) offen ausgebildet ist.

7. Vorrichtung nach Anspruch 6,
**dadurch gekennzeichnet,**
**dass** an dem Rahmen (13) der Schneidmesser (5) oder an dem Gehäuse (6) der Schneidmesser (5) Laufrollen (9, 10) angebracht sind, die auf dem Boden (2) zur Abstützung der Schneidmesser (5) aufliegen.

8. Vorrichtung nach Anspruch 7,
**dadurch gekennzeichnet,**
**dass** die Laufrollen als Laufräder (9) oder als Laufwalzen (10) ausgestaltet sind.

9. Vorrichtung nach Anspruch 8,
**dadurch gekennzeichnet,**
**dass** zwei Laufwalzen (10) parallel und beabstandet zueinander zwischen der Achse (11) des Spritzwagens (3) und den Schneidmessern (5) und dass die Laufräder (9) zwischen den Schneidmessern (5) und dem Traktor (1) angeordnet sind.

10. Vorrichtung nach einem der vorgenannten Ansprüche,
**dadurch gekennzeichnet,**
**dass** die Betätigung des Spritzwagens (3) und die Betätigung der Schneidmesser (5) gleichzeitig oder wechselweise zueinander von außen, vorzugsweise von dem Traktor (1), aktivierbar sind.

11. Bausatz zur Nachrüstung an einem Spritzwagen (3), insbesondere zur Verwendung nach einem der vorgenannten Ansprüche,
**dadurch gekennzeichnet,**
**dass** der Bausatz aus mindestens einem Schneidmesser (5) und einem Gehäuse (6) besteht, in dem das oder die Schneidmesser (5) rotierbar angelenkt sind, und dass das Gehäuse (6) mittels einem oder mehrerer Kolben (7) an dem Traggestell (4) des Spritzwagens (3) höhenverstellbar befestigt ist.
